# EUROPÄISCHE PATENTSCHRIFT

(11) **EP 1 291 820 B1**
(45) Veröffentlichungstag und Bekanntmachung des Hinweises auf die Patenterteilung: **15.11.2006**
(21) Anmeldenummer: 02018869.4
(22) Anmeldetag: 24.08.2002
(51) Int. Cl.: G06T 3/40

(54) **Verfahren und Vorrichtung zur Transformation eines Objektbildes**
Method and apparatus for transforming object pictures
Procédé et dispositif pour la transformation d'images d'objets

(30) Priorität: 07.09.2001 DE 10144045; 24.01.2002 DE 10202602
(43) Veröffentlichungstag der Anmeldung: 12.03.2003
(73) Patentinhaber: ROBERT BOSCH GMBH, 70442 Stuttgart (DE)
(72) Erfinder: Knee, Werner, 73728 Esslingen (DE); Beutnagel-Buchner, Uwe, 70186 Stuttgart (DE); Kirschbaum, Axel, 75417 Muehlacker (DE); Lindner, Markus, 70178 Stuttgart (DE)

(56) Entgegenhaltungen:
- US-A- 5 686 960
- WOLBERG, GEORGE: "Digital Image Warping" 1990 , IEEE COMPUTER SOCIETY PRESS , LOS ALAMITSO, CA, USA, ISBN 0-8186-8944-7, PP. 42-51,163-187 (CHAPTERS "SPATIAL TRANSFORMATIONS", "ANTIALIASING") XP002264623 * Seite 44, Absatz 2 - Seite 45, Absatz 2; Abbildung 3.4 * * Seite 166, Absatz 3 - Seite 169, letzter Absatz; Abbildungen 6.4-6.7 * * Seite 178, Absatz 2 - Seite 182, letzter Absatz; Abbildung 6.12 *
- SIEGEL S: "REALTIME POLYNOMIAL WARP HARDWARE FOR ARBITRARY RESOLUTION IMAGE RESAMPLING" ELECTRONIC IMAGING. INTERNATIONAL ELECTRONIC IMAGING EXPOSITION AND CONFERENCE. ADVANCE PRINTING OF PAPER SUMMARIES, WALTHAM, MA, US, Bd. 1, 28. März 1988 (1988-03-28), Seiten 394-399, XP000828170
- ELDON J ET AL: "IMAGE-RESAMPLING SEQUENCER SPEEDS GRAPHICS SYSTEM DESIGN" ELECTRONIC DESIGN, PENTON PUBLISHING, CLEVELAND, OH, US, Bd. 35, Nr. 14, 11. Juni 1987 (1987-06-11), Seiten 129-132,134,13, XP000007224 ISSN: 0013-4872
- ELDON J ET AL: "USING THE TMC2301 IMAGE RESAMPLING SEQUENCER" MICROPROCESSORS AND MICROSYSTEMS, IPC BUSINESS PRESS LTD. LONDON, GB, Bd. 14, Nr. 2, 1. März 1990 (1990-03-01), Seiten 107-118, XP000102973 ISSN: 0141-9331
- HECKBERT P S: "SURVEY OF TEXTURE MAPPING" IEEE COMPUTER GRAPHICS AND APPLICATIONS, IEEE INC. NEW YORK, US, Bd. 6, Nr. 11, 1. November 1986 (1986-11-01), Seiten 56-67, XP000002233 ISSN: 0272-1716

## Beschreibung

Die Erfindung bezieht sich auf ein Verfahren und eine Vorrichtung zur Transformation, insbesondere Rotation und/oder Skalierung, eines Objektbildes, insbesondere zur Darstellung auf einer Anzeigeeinrichtung mit einer matrixförmigen Anordnung von Zielbildpunkten.

Die Transformation kann insbesondere eine Drehung und/oder eine Skalierung, d.h. Dehnung bzw. Streckung eines als Pixeldatei bzw. Pixelmap gespeicherten Objektbildes sein. Derartige Verfahren werden in Grafikprogrammen verwendet, um Objektbilder um beliebige Winkel zu drehen und in x- und/oder y-Richtung zu skalieren. Sie werden insbesondere zur Darstellung eines Zeigers, Symbols oder einer Karte auf einer matrixförmigen Anzeigevorrichtung eines Kraftfahrzeuges, z. B. einem LCD-Display eingesetzt.

Ein Zeiger wird auf der Anzeigeeinrichtung eines Fahrzeuges im allgemeinen unter einem Drehwinkel angezeigt, der von einem Parameter, in der Regel einer Fahrzustandsgröße wie z. B. der Fahrzeuggeschwindigkeit oder Motordrehzahl, oder auch dem Tankinhalt oder einer Temperatur, abhängt. Das zu drehende Objektbild des Zeigers kann hierbei im allgemeinen farbig und mit unterschiedlicher Transparenz zur Wiedergabe vor einem Hintergrundbild ausgebildet sein, so dass jedem Bildpunkt des Zielbildes mehrere Bildpunktdaten, z. B. die Grundfarben R, G, B und auch ein Transparenzwert α, oder YUV und α, zuzuordnen sind. In Navigationssystemen werden vorgespeicherte Kartendaten zur Anpassung an die Größe bzw. Pixelzahl der Anzeigevorrichtung skaliert und die angezeigte Straßenkarte zum Teil kontinuierlich durch Drehung in Fahrtrichtung derartig ausgerichtet, dass die vertikale Richtung der Anzeigevorrichtung der Fahrtrichtung entspricht. Weiterhin kann zusätzlich eine Kompassanzeige in dem Bild wiedergegeben werden.

Weiterhin können in Grafikanwendungen z. B. eingescannte Bilder rechtwinklig ausgerichtet werden, Bilder vor dem Ausdruck zur optimalen Ausnutzung der Größe des Papierformates gedreht werden und Grafiksymbole in CAD-Programmen z. B. bei der Planung einer Wohnungseinrichtung platziert werden.

Bei der Rotation und/oder Skalierung von Objektbildern werden grundsätzlich pixelorientierte und vektororientierte Verfahren unterschieden. Beide Verfahren können in Hardware, in Software oder in einer Mischform aus beiden abgebildet werden.

Eine Abbildung eines Verfahrens in einer Hardware-Realisierung bedeutet, dass ein Algorithmus in einem Chip, in der Regel dem Grafikcontroller, fest verdrahtet ist. Dieser Hardwareblock erwartet vereinbarte Parameter über die Quelldaten, verarbeitet diese und stellt das Ergebnis z. B. in einem Speicherbereich wieder zur Verfügung. Algorithmen in Hardware müssen somit nur mit wenigen Daten versorgt werden und arbeiten die verdrahtete Aufgabe sehr schnell ab. Der Algorithmus selbst ist aber nicht mehr änderbar.

Eine Abbildung in einer Software-Realisierung erfolgt z. B. auf einer herkömmlichen Recheneinrichtung, z. B. auf einem PC. Ein Mikroprozessor erhält Befehle von einem Softwareprogramm. Das Softwareprogramm beinhaltet einen Algorithmus und arbeitet diesen mit Unterstützung des Mikroprozessors und seiner peripheren Einheiten ab. Ein Algorithmus in Software ist durch die leichte Änderungsmöglichkeit sehr flexibel, läuft aber durch das rein sequentielle Abarbeitungsverfahren des Mikroprozessors langsamer als der Hardware-Algorithmus.

Weiterhin werden z. B. in PCs mit leistungsfähiger Grafikkarte für Spieleanwendungen kombinierte Systeme verwendet, bei denen z. B. die Software die Drehung der Vektordaten übernimmt, jedoch das Zeichnen des neuen Bildes als Hardwareblock im Grafikcontroller realisiert ist. Diese Lösung kombiniert die Flexibilität der Software mit der Schnelligkeit der Hardware-Abbildung. Hierbei können z. B. ein Grafikcontroller, Mikroprozessor, Programmspeicher und Arbeitsspeicher über ein Bussystem verbunden sein. Die Software für einen Mikroprozessor und sämtliche benötigten Grafikdaten, einschließlich des Quell-Pixelbildes, werden in dem Programmspeicher gespeichert. Der Arbeitsspeicher dient dem Mikroprozessor und ggf. dem Grafikcontroller als Zwischenspeicher und beinhaltet einen Bildwiederholspeicher, in dem das auf der Anzeigeeinrichtung darzustellende Zielbild gespeichert wird. Das im Bildwiederholspeicher gespeicherte Bild wird zyklisch z. B. 60 mal pro Sekunde von dem Grafikcontroller ausgelesen und an die Anzeigeeinrichtung gesendet.

Bei pixelorientierten Verfahren wird das Objektbild als Pixelmap-Grafik beschrieben. Bei der Drehung und/oder Skalierung von Pixelmap-Grafiken wird jedes einzelne Pixel des Objektbildes mit einem Algorithmus neu berechnet. Bei der laufenden Anpassung eines Objektbildes an einen veränderlichen Drehwinkel führt eine derartige Berechnung in Echtzeit bei einer Softwareimplementierung zu einem hohen Rechenaufwand. Hardwaremäßige Realisierungen werden insbesondere im Automotiv-Bereich nicht verwendet. Zur Darstellung z. B. drehbarer Zeiger kann für jede mögliche Zeigerstellung ein Bild mit Zielbildpunktdaten vorab berechnet und gespeichert werden. Somit müssen für die jeweilige Zeigerstellung lediglich die Bildpunktdaten des Bildes aufgerufen und dargestellt werden. Nachteilhaft an einem derartigen Verfahren ist, dass insbesondere bei einer höheren Auflösung und farbiger, transparenter Darstellung ein erheblicher Speicherplatz erforderlich ist.

Bei vektororientierten Verfahren wird das Objektbild durch vorab gespeicherte Vektoren beschrieben. Die Drehung und/oder Skalierung der Vektor-Grafik erfolgt durch die Neuberechnung der einzelnen Vektoren mit anschließendem Neuzeichnen des Bildes. Ein Zeiger wird hierbei z. B. durch seine Zeigerkontur beschrieben. Die Vektoren werden für die Darstellung des Zeigers in dem jeweiligen Drehwinkel in Echtzeit rotiert.

Da bei diesen Verfahren nur die Vektoren der Zeigerkontur gespeichert sind, ist der erforderliche Speicherplatz gering. Bei der laufenden Darstellung des Zeigers ist nur die Transformation der Vektoren in Abhängigkeit eines Parameters zu berechnen, so dass auch der Rechenaufwand begrenzt ist. Mit derartigen Verfahren lassen sich jedoch im allgemeinen nur einfachere Darstellungen eines Zeigers gut beschreiben, da insbesondere aufwendigere Formgebungen und Zeigerdarstellungen mit mehreren Farbwerten und Transparenzwerten entweder eine hohe Anzahl von Vektoren oder eine Beschreibung jedes Bildpunktes durch einen eigenen Vektor erforderlich machen. Dies führt bei einer Softwareimplementierung zu einem in Echtzeit praktisch nicht durchführbaren Rechenaufwand, so dass allenfalls aufwendige Hardwarerealisierungen verwendet werden.

Die DE 198 16 795 A1 beschreibt ein Verfahren zur Darstellung von bewegten Objekten im Pixelmap-Format auf einer matrixförmigen Anzeigevorrichtung, bei dem für verschiedene Objektdarstellungen einer vorbestimmten Bahnkurve Pixelmaps jeweils im voraus berechnet und abgespeichert werden und die jeweilige Objektstellung entlang der Bahnkurve durch Lesen und Anzeigen der Pixelmaps sowie ggf. Berechnung eines Zwischenpixelmaps durch Interpolation aus den Bildpunktdaten der vorgespeicherten Pixelmaps durchgeführt wird. Somit werden die oben beschriebenen Verfahren der Speicherung sämtlicher Bildpunktdaten sowie der Berechnung jedes Zielbildes aufgrund eines vorgespeicherten Objektbildes kombiniert. Nachteilig hierbei ist jedoch, dass entweder eine hohe Anzahl von Zeigerdarstellungen mit entsprechendem Speicherplatz vorgespeichert sein muss oder die Qualität der Darstellung bei der Interpolation sichtbar beeinträchtigt wird.

Eldon und Wegner beschreiben in "Using the TMC2301 image resampling sequencer", 2407 Microprocessors and Microsystems 14(1990-03), No. 2, London GB, XP000102973 eine Hardwarearchitektur zur Farbbildtransformation, wobei für jeden Zielbildpunkt Quellbildpunktskoordinaten ermittelt werden, und verschiedene alternative Interpolationsverfahren, inklusive bilinearer Interpolation, zur Ermittlung der Zielbildpunktsdaten aus den Quellbildpunktsdaten vorgestellt werden.

Siegel beschreibt in "Realtime Polynomial Warp Hardware for Arbitrary Resolution Image Resampling", ELECTRONIC IMAGING. INTERNATIONAL ELECTRONIC IMAGING EXPOSITION AND CONFERENCE. ADVANCE PRINTING OF PAPER SUMMARIES, WALTHAM, MA, US Vol: 1, Page(s): 394-399, XP000828170, ein System welches in der Lage ist, größere Bilder zu transformieren, indem diese in kleinere zu transformierende Blöcke zerlegt werden.

Das erfindungsgemäße Verfahren mit den Merkmalen des Anspruchs 1 hart zum Ziel dass mit relativ geringem Hardwareaufwand, insbesondere geringem Speicherbedarf und klein dimensionierter Recheneinrichtung, und dennoch relativ geringem Rechenaufwand eine genaue Darstellung eines Objektbildes unter einer beliebigen Transformation, insbesondere einem beliebigen Drehwinkel möglich ist. Weiterhin wird eine effiziente Abbildung einer Transformation, die insbesondere eine Rotation und/oder Skalierung und/oder eine Translation umfasst, in Hardware und Software geschaffen.

Hierbei werden unter einem Bildpunkt die Koordinaten bzw. das Koordinatenpaar xᵢ, yᵢ des Bildpunktes verstanden, wohingegen die dem Bildpunkt zugeordneten Daten, d.h. Farbwerte und Transparenz, als Bildpunktdaten bezeichnet werden.

Erfindungsgemäß wird ebenfalls von den Zielbildpunkten ausgegangen. Es wird zumindest ein Teil der Zielbildpunkte - d.h. die durch ihre Spalten- und Zeilenzahl gegebenen x,y-Koordinaten - jeweils invers transformiert, wodurch entsprechende Quellbildpunkte - d.h. x,y-Koordinaten im Quellbild - ermittelt werden. Bei einer Transformation mit einer Drehung und/oder Skalierung ist die entsprechende inverse Transformation eine Drehung um den negativen Drehwinkel und/oder eine Skalierung um die Kehrwerte der Skalierungsfaktoren der x-, y-Richtung, was durch eine geeignete Matrix, im allgemeinen die Rotationsmatrix mit negativem Drehwinkel und den Kehrwerten der Skalierungsfaktoren dargestellt werden kann. Die so ermittelten Quellbildpunkte weisen in den meisten Fällen unganzzahlige x,y-Koordinatenwerte auf und stimmen mit keinem der Objektbildpunkte überein. Die Daten eines Zielbildpunktes werden nunmehr aus einem Vergleich seines Quellbildpunktes mit den vorgespeicherten Objektbildpunkten des Objektbildes ermittelt.

Da das zu transformierende Objektbild somit durch einzelne Bildpunkte beschrieben wird, d. h. als Pixelbild gespeichert ist, können auch komplexere Gestaltungen mit mehreren Farbstufen und Transparenzwerten in einer Pixelmap-Datei gespeichert werden. Indem nur ein Objektbild - d. h. insbesondere bei einem Drehwinkel von Null und mit Skalierungsfaktor eins - gespeichert ist, wird auch bei komplexerer Formgebung, Farbvariationen und Transparenzwerten ein sehr geringer Speicherplatz benötigt. Hierbei ist erfindungsgemäß eine Darstellung von farbigen Bildern mit Transparenzwerten vorgesehen.

Durch einen Vergleich der Koordinaten des ermittelten Quellbildpunktes mit Minimal- und Maximalwerten kann ermittelt werden, ob er in das Objektbild fällt und somit nachfolgend seine Daten zu ermitteln sind oder er außerhalb des Objektbildes liegt und somit nicht relevant ist. Falls er nicht relevant ist, wird ein vorhandener Transparenzwert auf Null gesetzt.

Falls der ermittelte Quellbildpunkt mit seinen Koordinaten genau auf einen Objektbildpunkt fällt, werden direkt dessen Bildpunktdaten als R, G, B, α- Werte genommen. Ansonsten kann vorteilhafterweise eine Mittelung über die entsprechenden Bildpunktdaten der vier umgebenden Objektbildpunkte durchgeführt werden. Hierzu soll erfindungsgemäß eine lineare Mittelung verwendet werden, bei welcher die Gewichtung der Bildpunktdaten jedes Objektpunktes proportional zum Abstand seiner Koordinaten zu den Koordinaten (d.h. Spalten- und Zeilenzahl) des Quellbildpunktes erfolgt. Eine derartige Gewichtung ist insbesondere für die Umsetzung in einem integrierten Schaltkreis (IC, z. B. auch einem ASIC (application specific integrated circuit)) gut geeignet. Bei einer derartigen Mittelung bleibt die Kantenglättung (antialiasing) des Objektbildes - im allgemeinen durch eine stufenweise Änderung des Transparenzwertes am Rande des Objektbildes - im wesentlichen erhalten, so dass gute Darstellungen des transformierten Objektes auch ohne eine nachträgliche Filterung des transformierten Objektbildes erreicht werden können.

Erfindungsgemäß kann der Rechenaufwand der inversen Transformation, insbesondere einer Rückwärtsdrehung der Zielbildpunkte, vorteilhafterweise noch verringert werden, indem bereits vor der Ermittlung der Quellbildpunkte die Zielbildpunkte mit dem Zielbild verglichen werden, innerhalb von dem die für die Darstellung des gedrehten Objektes relevanten Zielbildpunkte liegen. Hierzu können z. B. Eckbildpunkte des Objektbildes mit minimalen und maximalen Koordinatenwerten transformiert werden, z. B. um den positiven Drehwinkel gedreht werden, und somit entsprechende Eckbildpunkte des Zielbildes bilden. Somit wird bei dieser Ausführungsform ein Vergleich im Zielbild und nicht im Quellbild durchgeführt. Hierbei kann durch den relativ geringen Rechenaufwand der Transformation von vier Objektbildpunkten der spätere Rechenaufwand der inversen Transformation der Zielbildpunkte erheblich verringert werden. In beiden Ausführungsformen wird ein eventuell vorhandener Transparenzwert auf Null gesetzt oder der Helligkeitswert beziehungsweise die Farbwerte dem Hintergrundbild angepasst.

Um bei größeren Skalierungsfaktoren bzw. größeren Bereichen des Skalierungsfaktors hinreichend scharfe Darstellungen des gedrehten Objektes zu erreichen, können hierfür auch mehrere Objektbilder des gleichen Objektes z. B. mit unterschiedlicher Auflösung verwendet werden.

Weiterhin kann das Objektbild gegenüber der Auflösung des Zielbildes der Anzeigeeinrichtung auch mit einer höheren örtlichen Auflösung gespeichert werden. Ein derartiges Supersampling erfordert im wesentlichen lediglich einen höheren Speicherbedarf für das Objektbild mit den jeweiligen Bildpunktdaten. Der Rechenaufwand für die Rückwärtstransformation der Zielbildpunkte und der Mittelung ihrer Daten aus den Objektbildpunktdaten ist von der Anzahl der gespeicherten Objektbildpunktdaten unabhängig, so dass der Gesamtrechenaufwand bei einem derartigen Supersampling nicht erhöht ist.

Das Objektbild kann auch in mehrere Segmente unterteilt werden, die jeweils einzeln transformiert werden. Hierdurch kann insbesondere bei der Rotation eines länglichen Objektbildes, z. B. eines Zeigers, der zu berechnende Zielbildbereich gering gehalten werden. Zu den Segmenten des Objektbildes werden hierbei zunächst in oben beschriebener Weise durch Transformation ihrer Objektsegmenteckpunkte Zielsegmenteckpunkte ermittelt. Anschließend können gemäß einer Alternative die Ränder, die durch diese Zielsegmenteckpunkte verlaufen, als lineare Geraden parametrisiert werden und die Zielbildpunkte innerhalb der Ränder als Zielbildpunkte ermittelt werden. Gemäß einer zweiten alternativen Ausführungsform kann ein Zielsegmentbereich als diese Zielsegmentpunkte erfassendes Polygon, insbesondere ein vertikal/horizontal ausgerichtetes Rechteck gewählt werden, dessen Zielbildpunkte anschließend invers transformiert werden.

Die erfindungsgemäße Vorrichtung kann insbesondere mit einem IC, z. B. ASIC, für die lineare Mittelung der Zielbildpunktdaten aus den Objektbildpunktdaten realisiert werden, wodurch eine kostengünstige Herstellung mit hoher Rechengeschwindigkeit möglich wird.

Gemäß einer vorteilhaften Weiterbildung kann eine weitgehend hardwaremäßige und dennoch relativ kostengünstige Realisierung erfolgen, indem die Transformationen und Interpolationen durch eine Hardware-Filtereinrichtung eines Grafikcontrollers durchgeführt werden, die zu transformierenden Segmente des Objektbildes in einen Eingangs-Cachespeicher und die durch Transformation errechneten Zielsegmentbereiche in einen Ausgangs-Cachespeicher des Grafikcontrollers geladen werden, wobei der Grafikcontroller und eventuell der zur Programmsteuerung verwendete Mikroprozessor integriert werden.

Die Erfindung wird im folgenden anhand der beiliegenden Zeichnungen an einigen Ausführungsformen näher erläutert.

Es zeigen:
- Fig.1: eine Anzeigeeinrichtung mit Objektbild und Zielbild;
- Fig.2: ein Flußdiagramm eines Verfahrens gemäß einer Ausführungsform der Erfindung;
- Fig.3: ein Blockschaltbild einer Vorrichtung zur Durchführung des Verfahrens von Fig. 2;
- Fig.4: ein Flußdiagramm eines Verfahrens gemäß einer weiteren Ausführungsform der Erfindung;
- Fig.5: ein Blockschaltbild einer Vorrichtung zur Durchführung des Verfahrens von Fig. 4;
- Fig.6: eine Ausschnittsvergrößerung der Anzeigeeinrichtung zur Ermittlung der Bildpunktdaten aus den Objektbildpunkten;
- Fig.7: eine Darstellung eines weiteren Objektbildes mit einer Unterteilung in mehrere Objektsegmente;
- Fig.8: das aus dem Objektbild der Fig. 7 zu berechnende Zielbild mit einer Unterteilung in Zielsegmente und Zielsegmentbereiche;
- Fig.9: ein Blockschaltbild einer Vorrichtung zur Transformation des Objektbildes von Fig. 7 auf das Zielbild von Fig. 8;
- Fig.10: ein weiteres Blockschaltbild der Vorrichtung von Fig. 9 mit Angabe der Signalverläufe;
- Fig.11: ein Flußdiagramm eines mit der Vorrichtung der Fig. 9 und 10 durchgeführten Verfahrens.

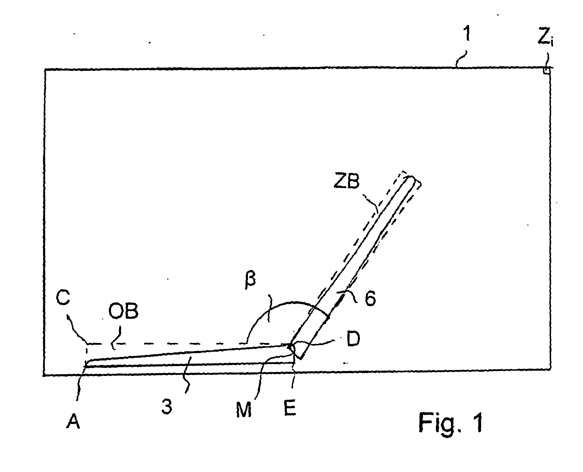

Gemäß Fig. 1 ist als Anzeigeeinrichtung ein LCD-Display 1 mit einer matrixförmigen Anordnung von Pixeln bzw. Bildpunkten Zᵢ mit i = 1 bis n vorgesehen. Auf dem LCD-Display 1 wird ein Zeiger in verschiedenen Drehwinkeln β wiedergegeben, wobei der Drehwinkel β einem Parameter, z. B. einer Fahrzeuggeschwindigkeit oder Motordrehzahl entspricht. In Fig. 1 ist ein Zeiger 3 in der Grundstellung (β = 0) in einem durch gestrichelte Linien wiedergegebenen Objektbild OB und ein um einen Drehwinkel β gedrehter Zeiger 6 in einem Zielbild ZB gezeigt. Das Objektbild OB und das Zielbild ZB werden durch Pixelmap-Dateien beschrieben, wobei zu jedem durch seine Zeilen- und Spaltenzahl beschriebenen Bildpunkt Daten gespeichert sind, so dass das Zielbild ZB mit variabler Farbgebung und Transparenz vor einem Hintergrund, z. B. einer Skalierung oder weiteren Anzeigen, wiedergegeben werden kann. In den gezeigten Ausführungsformen werden hierbei die Grundfarben R, G, B und ein Transparenzwert α verwendet, alternativ hierzu können auch andere Farbformate, z. B. YUV und α verwendet werden. Die Spalten- und Zeilenzahl werden im folgenden als (ganzzahlige) x,y - Koordinaten betrachtet. Für die Darstellung des Zielbildes ZB müssen somit aus den bekannten Bildpunktdaten Rₖ, Gₖ, Bₖ ,αₖ der Objektbildpunkte Oₖ und dem bekannten Drehwinkel β die entsprechenden Zielbildpunktdaten Rᵢ, Gᵢ, Bᵢ, αᵢ ermittelt werden.

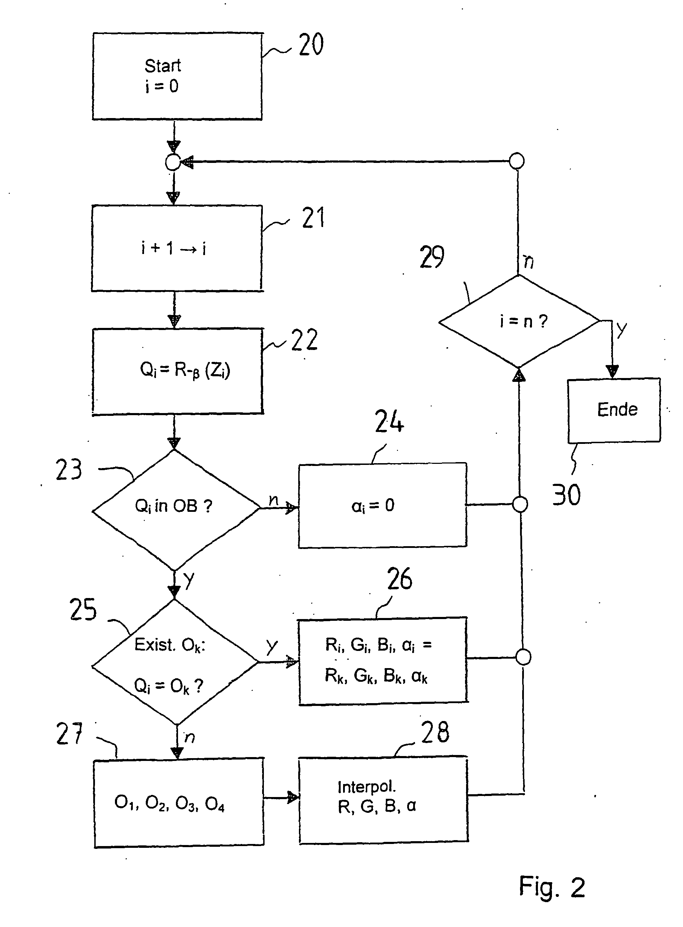

Gemäß dem in Fig. 2 gezeigten Verfahren wird hierzu in einem ersten Verfahrensschritt 20 bei Eingabe eines Drehwinkels β bzw. Vorliegen eines geänderten Drehwinkels β die Berechnung der neuen Zielbildpunkte eingeleitet und ein Parameter i auf Null gesetzt. In der durch den zweiten Verfahrensschritt 21und den Entscheidungsschritt 29 gebildeten Schleife werden die Zielbildpunkte Zᵢ für i = 1 bis n mit ihren x- und y-Koordinaten nacheinander aufgerufen und anschließend in einem dritten Verfahrensschritt 22 mittels einer Rotationsmatrix R_{-β} um den negativen Drehwinkel -β gedreht. Hierdurch werden die x- und y-Koordinate des Quellbildpunktes Qᵢ ermittelt. In dem Entscheidungsschritt 23 wird daraufhin überprüft, ob der ermittelte Quellbildpunkt in dem Objektbild OB liegt. Das in Fig. 1 gezeigte rechteckige Objektbild OB wird einfach durch minimale und maximale x- und y-Koordinaten festgelegt, so dass für diesen Vergleich lediglich die x- und y-Koordinate des ermittelten Quellbildpunktes Qᵢ mit diesen Werten zu vergleichen sind. Falls der Quellbildpunkt Qᵢ nicht in dem Objektbild OB liegt, wird er nicht dargestellt. Hierzu wird bei der Darstellung mit Transparenzwert dieser gemäß Schritt 24 auf Null gesetzt, so dass der entsprechende Zielbildpunkt Zᵢ auf dem LCD-Display 2 nicht erkannt wird. Anschließend wird in den Schritten 29, 30 und 21 das Verfahren beendet oder der nächste Zielbildpunkt Zᵢ₊₁ genommen.

Falls in dem Entscheidungsschritt 23 ermittelt wird, dass der Quellbildpunkt Qᵢ im Objektbild OB liegt, wird in dem nächsten Entscheidungsschritt 25 zunächst überprüft, ob der ermittelte Quellbildpunkt Qᵢ genau auf einen vorgespeicherten Objektbildpunkt Oₖ fällt, d. h. in seiner x- und y-Koordinate mit diesem übereinstimmt. In diesem Fall werden in Schritt 26 direkt die Bildpunktdaten Rₖ, Gₖ, Bₖ, αₖ des Objektbildpunktes Oₖ als Bildpunktdaten Rᵢ, Gᵢ, Bᵢ, αᵢ des betreffenden Zielbildpunktes Zᵢ verwendet, und in den Schritten 21, 29 wiederum der nächste Zielbildpunkt Zᵢ₊₁ herangezogen oder das Verfahren beendet. Falls der Quellbildpunkt Qᵢ hingegen zwischen den vorgegebenen Objektbildpunkten liegt, werden in Schritt 27 zunächst die benachbarten Objektbildpunkte - der Einfachheit halber als O₁, O₂, O₃, O₄ bezeichnet - ermittelt. In Schritt 28 werden die Bildpunktdaten Rᵢ, Gᵢ, Bᵢ, αᵢ aus den entsprechenden Bildpunktdaten dieser angrenzenden Objektbildpunkte interpoliert.

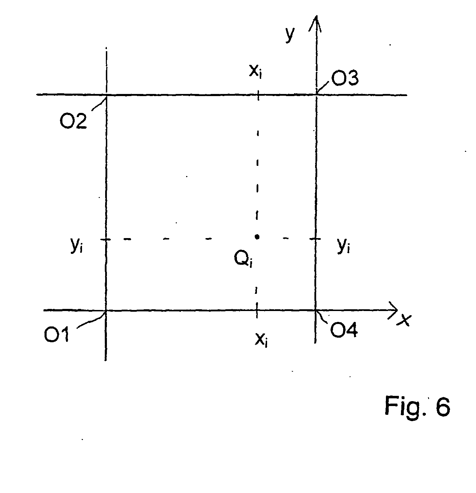

Dies ist in Figur 6 detaillierter gezeigt. Die x- und y-Koordinaten der angrenzenden Objektbildpunkte O₁, O₂, O₃, O₄ ergeben sich somit als Integerwert von xᵢ , yᵢ oder hierzu inkrementierter Wert.

Die Mittelung kann soll erfindungsgemäß linear erfolgen, indem die Bildpunktdaten der Objektbildpunkte entsprechend dem jeweiligen Abstand zu den betreffenden Objektbildpunkten gewichtet werden. Hierbei kann insbesondere anstelle des geometrischen, euklidisch zu berechnenden Abstandes eine einfache getrennte lineare Mittelung über die X- und Y-Koordinate erfolgen. So kann für die untere Zeile der Objektbildpunkte O₁ und O₄ eine lineare Mittelung in Abhängigkeit des Abstandes der x-Koordinaten vorgenommen werden, bei der somit die Daten von O₁ mit dem Faktor (1- (xi - int (xi))) (d.h. dem Abstand von xi zu dem gegenüberliegenden Punkt O₄) und die Daten von O₄ entsprechend mit dem Faktor (xi - int (xi)) multipliziert und anschließend addiert werden. Anschließend wird eine entsprechende lineare Mittelung der Bildpunktdaten der oberen Zeile mit den Objektbildpunkten O₂ und O₃ durchgeführt, und aus den so berechneten Werten der oberen Zeile und unteren Zeile ein entsprechend über die y-Koordinate gemittelter Wert berechnet, bei dem der Wert der unteren Zeile mit dem Abstand zur oberen Zeile, d.h. dem Faktor (1- (yi - int (yi))) und der Wert der oberen Zeile mit dem Abstand zur unteren Zeile, d.h. dem Faktor (yi - int (yi)) multipliziert und anschließend addiert werden. Eine derartige lineare Mittelung erhält hierbei eine bei der Generierung der vorgespeicherten Objektbildpunkte angewendete Kantenglättung (antialiasing), so dass erfindungsgemäß eine nachträgliche Filterung nicht notwendig ist.

Nachdem die ermittelten Bildpunktdaten Rᵢ, Gᵢ, Bᵢ, αᵢ dem Zielbildpunkt Zᵢ zugeordnet sind, wird in Schritt 21 wiederum der nächste Zielbildpunkt Zᵢ₊₁ herangezogen.

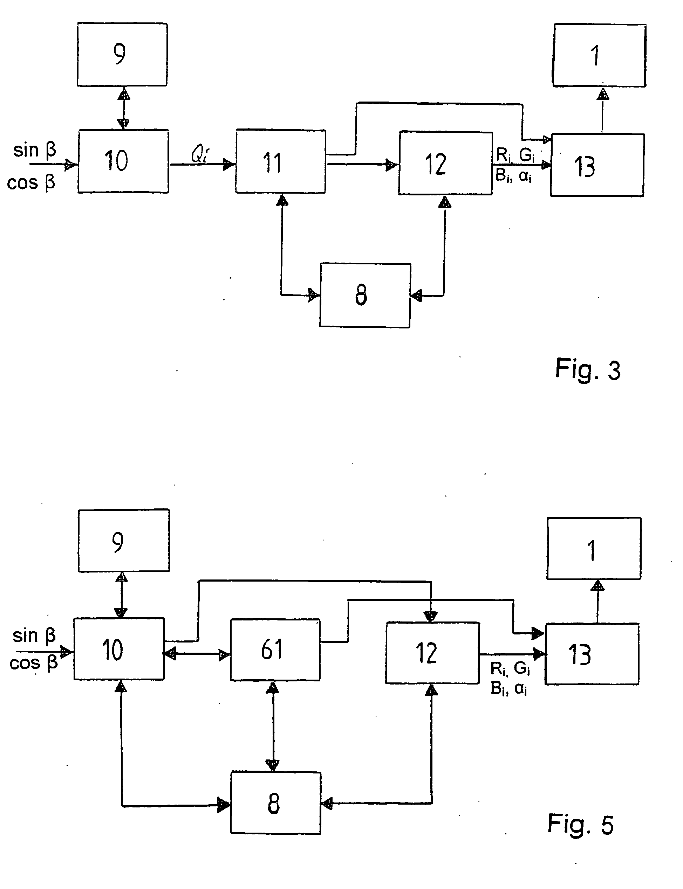

Bei der entsprechenden Vorrichtung zu dem Verfahren von Fig. 2 wird gemäß Fig. 3 einer Rotationseinrichtung 10 ein Drehwinkel β eingegeben. Vorteilhafterweise werden hierzu von einem vorgeschalteten Rechner bereits der für die Rotationsmatrix erforderliche Sinus- und Cosinus-Wert geliefert. Die Rotationseinrichtung 10 nimmt sukzessive die Zeilen- und Spaltenzahl jedes Zielbildpunktes Zᵢ z.B. aus einem Koordinatenspeicher 9 als seine ganzzahligen Koordinaten, berechnet die Quellbildpunkte Qᵢ (Schritt 22 in Figur 2) und gibt diese an eine erste Vergleichseinrichtung 11 weiter, die die Koordinaten des Quellbildpunktes Qᵢ (gemäß Schritt 23) mit den Koordinaten der Punkte A,C,D,E vergleicht, die sie z.B. aus einem Objektbildspeicher 8 aufnimmt oder als Minimal- und Maximalwerte gespeichert hat. Die Vergleichseinrichtung 11 überprüft, ob der ermittelte Quellbildpunkt Qᵢ in dem Objektbild OB liegt. Falls dies der Fall ist, werden die Koordinaten des Quellbildpunktes Qᵢ an eine Interpolationseinrichtung 12 weitergegeben, in der gemäß den Schritten 25, 26, 27 und 28 die Daten des Zielbildpunktes Zᵢ aus den entsprechenden Daten der in dem Objektbildspeicher 8 gespeicherten Objektbildpunkte Oᵢ ermittelt werden, woraufhin von der Rotationseinrichtung 10 der nächste Zielbildpunkt Zᵢ₊₁ genommen wird. Die ermittelten Daten R, G, B, α der Zielbildpunkte Zᵢ werden einem Zwischenbildspeicher (frame buffer) 13 zur Darstellung auf der Anzeigeeinrichtung 1 zugeführt.

Für einen Zeiger mit 300 x 50 Bildpunkten mit jeweils einem Byte Datenbreite wird für jede Grundfarbe R, B, G sowie die Transparenz α lediglich ein Objektbildspeicher 8 mit 60 kByte Speicherplatz benötigt. Der kleinste mögliche Drehwinkel hängt nur von der Rechengenauigkeit des Drehalgorithmus bzw. der Rotationseinrichtung 10 ab. Für eine Rotation eines Zielbildpunktes Zᵢ durch Multiplikation mit der 2 x 2 - Rotationsmatrix R sind lediglich vier Multiplikationen und zwei Additionen durchzuführen. In Schritt 23 müssen für jeden Zielbildpunkt i = 1 bis n jeweils vier Vergleiche Ihrer Koordinaten mit Minimal- und Maximalwerten durchgeführt werden. Bei der Ermittlung der Bildpunktdaten gemäß den Schritten 24, 25, 26, 27 sind im maximalen Fall - wenn die Bedingung von Schritt 23 nie erfüllt sein sollte - sechs Multiplikationen, sechs Additionen und drei Shifts für n Zielbildpunkte durchzuführen.

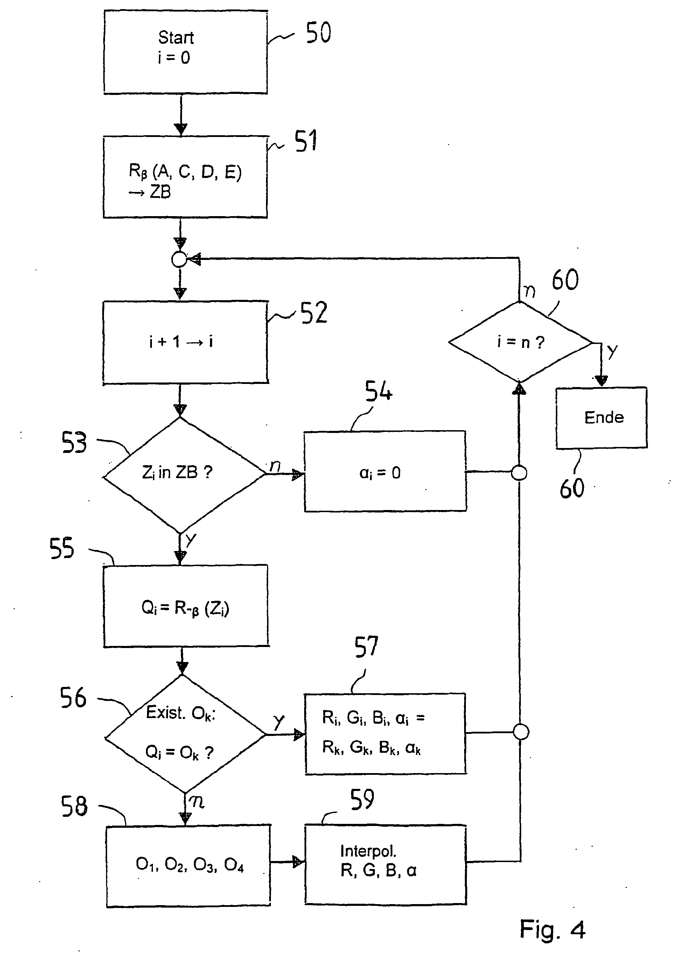

Bei der in Fig. 4 und 5 gezeigten Ausführungsform werden nicht zu sämtlichen Zielbildpunkten Zᵢ durch Rückwärtsdrehung die entsprechenden Objektbildpunkte Oᵢ ermittelt, sondern es wird zur Verringerung des Rechenaufwandes zunächst eine geeignete Vorauswahl der relevanten Zielbildpunkte getroffen. Hierzu werden gemäß Fig. 4 von dem ersten Verfahrensschritt 50 mit Einlesen und ggf. Vergleich des Drehwinkels β ausgehend in dem zweiten Verfahrensschritt 51 zunächst um den Drehwinkel β gedrehte Koordinaten der Objektbildpunkte A, C, D, E ermittelt. Hierdurch werden die entsprechenden Eckpunkte des Zielbildes ZB berechnet. Als nächstes werden in der durch die Schritte 52, 60, 61 gebildeten Schleife sukzessive die Zielbildpunkte Zᵢ, i = 1 bis n mit ihrer Spalten- und Zeilenzahl als x- und y-Koordinaten aus dem Koordinatenspeicher 9 ausgelesen und anschließend in Schritt 53 überprüft, ob sie in dem Zielbild ZB liegen. Falls sie nicht in ZB liegen, wird in Schritt 54 der Transparenzwert auf Null gesetzt (alternativ hierzu können auch bei dieser Ausführungsform wiederum die Farbwerte dem Hintergrund angepasst werden); falls sie in ZB liegen, werden in den Schritten 55, 56, 57, 58 und 59 entsprechend den oben beschriebenen Schritten 22 und 25 bis 28 die Daten ermittelt.

Entsprechend empfängt die Rotationseinrichtung 10 in Fig. 5 zunächst die Koordinaten der Objektbildpunkte A, C, D, E von dem Objektbildspeicher 8 und gibt entsprechend durch Rotation um β gemittelte Werte an eine zweite Vergleichseinrichtung 61 zur Durchführung des Entscheidungsschrittes 53 aus. Die zweite Vergleichseinrichtung 61 setzt die Daten entweder auf Null und gibt sie direkt an den Zwischenspeicher 13 weiter oder veranlasst eine Rotation des Zielbildpunktes durch die Rotationseinrichtung 10 und Weitergabe der ermittelten Quellbildpunkte an die Interpolationseinrichtung 12 zur Durchführung der Schritte 56 bis 59 und Ausgabe der berechneten Daten an den Zwischenbildspeicher 13.

Die Interpolationseinrichtung kann in sämtlichen Ausführungsformen ganz oder teilweise als ASIC ausgeführt sein. Der Objektbildspeicher 8 kann insbesondere als nichtflüchtiger Speicher und der Zwischenspeicher 13 als flüchtiger Speicher ausgebildet sein. Die Einrichtungen 11, 12 und 61 können hardwaremäßig ausgeführt oder als Softwareeinrichtungen implementiert werden.

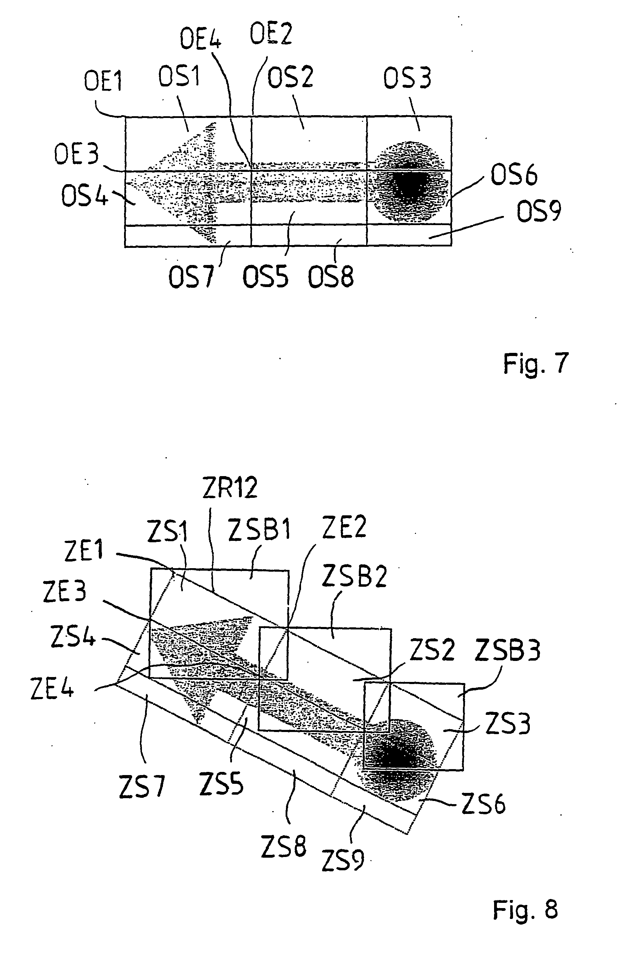

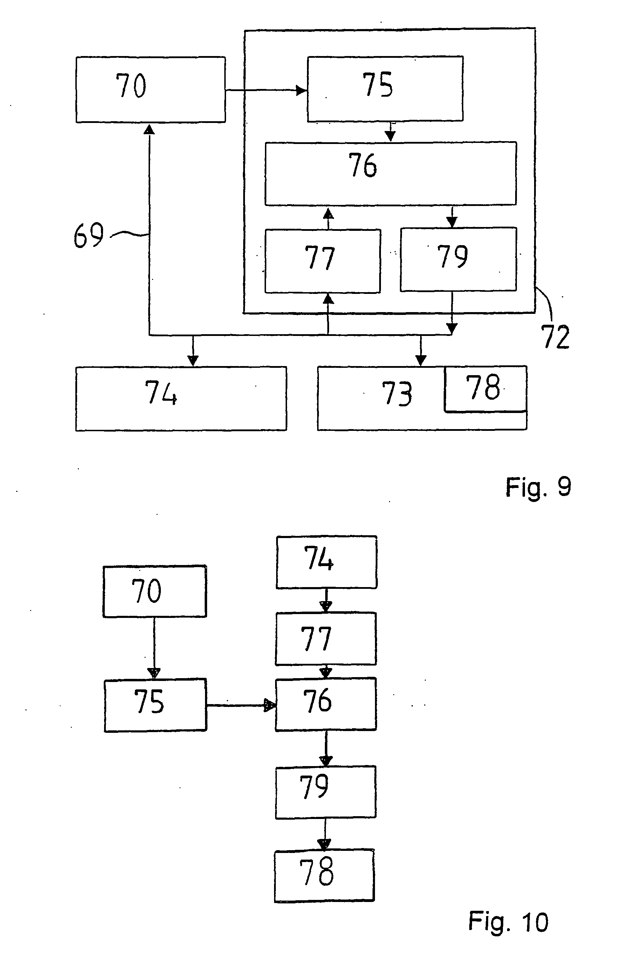

Gemäß der in Fig. 7 bis 11 gezeigten Ausführungsform kann das Objektbild OB auch in mehrere Objektsegmente OS1 - OS9 unterteilt werden, die unterschiedliche Größen und Formen haben können. Für eine zeilenorientierte Pixelverarbeitung bilden die Objektsegmente OS1 bis OS9 hierbei horizontal/vertikal ausgerichtete Rechtecke, deren vier Objektsegmenteckpunkte - in Fig. 7 sind die Objektsegmenteckpunkte OE1,2,3,4 des ersten Objektsegmentes OS1 gezeigt - die minimalen und maximalen x- und y-Koordinaten der erfassten Objektbildpunkte aufweisen. Die Segmentierung kann nach unterschiedlichen Kriterien vorgenommen werden; vorteilhafterweise entspricht die Größe der Segmente der Größe eines weiter unten mit Bezug zu Fig.9 und 10 detaillierter beschriebenen Eingangsspeichers 77 eines Grafikcontrollers 72, so dass die Anzahl der Segmente von der Größe des Quellbildes abhängt.

Die Objektsegmente OS1- OS9 werden separat transformiert. Hierzu werden zunächst für jedes Objektsegment durch Transformation der Objektsegmenteckpunkte OE1,2,3,4 Zielsegmenteckpunkte ZE1,2,3,4 gebildet. Die durch Transformation - der Einfachheit halber ist eine Rotation ohne Angabe einer Skalierung gezeigt - der einzelnen.Objektsegmente gebildeten Zielsegmente ZS1 - ZS9 liegen gemäß Fig. 8 im allgemeinen unter einem Winkel zur x-Achse und sind somit nicht für eine zeilenorientierte Pixelverarbeitung geeignet.

Daher können gemäß einer Ausführungsform zunächst die Ränder bzw. Randbereiche parametrisiert werden, z. B. linear parametrisiert werden, indem lineare Geraden - gezeigt ist in Fig. 8 beispielhaft die lineare Gerade ZR12 zwischen Z1 und Z2 - durch die Zielsegmenteckpunkte gelegt werden und die innerhalb der Ränder liegenden Bildpunkte ermittelt werden.

Gemäß einer alternativen Ausführungsform wird zu jedem Zielsegment ZS1 - ZS9 ein dieses umgebender rechteckiger, horizontal/vertikal ausgerichteter Zielsegmentbereich ZSB1 bis ZSB8 gebildet. Die Zielsegmentbereiche ZSB1 bis ZSB8 werden - wie in der obigen Ausführungsform detaillierter beschrieben - pixelweise bzw. zielbildpunktweise berechnet, indem zu jedem Zielbildpunkt durch inverse Transformation - d.h. Rückwärtsdrehung - Objektbildpunktdaten ermittelt werden. Da die Zielsegmentbereiche sich im allgemeinen überschneiden, werden hierbei entweder zu einigen Zielbildpunkten die Berechnungen mehrfach durchgeführt, oder es wird ein Register mit bereits berechneten Zielbildpunkten angelegt; der hierfür erforderliche Aufwand, die Koordinaten jedes Zielbildpunktes mit den Einträgen des Registers zu vergleichen, wird in der Regel jedoch zu hoch sein.

Diese Ausführungsform mit einem segmentiertem Objektbild führt insbesondere bei einer Rotation von länglichen schmalen Objektbildern - z. B. Zeigern - zu einer erheblichen Verringerung des Rechenaufwandes, da ohne Segmentierung auch bei der Begrenzung des Zielbereichs durch die Transformation der Eckpunkte im allgemeinen ein sehr großer Zielbereich gebildet wird, der viele Zielbildpunkte enthält, zu denen keine Quellbildpunkte ermittelt werden. Indem die Segmentgröße an die Größe des Eingangsspeichers 77 des Grafikcontrollers, insbesondere eines Eingangs-Cachespeichers 77 mit schneller Zugriffszeit, angepasst wird, kann durch eine nachfolgende hardwaremäßig realisierte Berechnung der inversen Transformation eine schnelle Bildverarbeitung erreicht werden, wie im folgenden gezeigt wird.

Gemäß Fig. 9 verbindet ein Bussystem 69 einen Mikroprozessor 70, einen Arbeitsspeicher (RAM) 73, einen Programmspeicher 74 (z. B. ein Flash-ROM) und den Grafikcontroller 72. Im Programmspeicher 74 ist neben der Software des Verfahrens auch das Objektbild OB als Pixelmap gespeichert. Der Grafikcontroller 72 weist eine Filtereinrichtung 76 zur Berechnung der Transformation und inversen Transformation sowie einer Interpolation zur Ermittlung der Zielpunktdaten aus den Objektpunktdaten und als RAM-Speicherbereiche einen Eingangs-Cachespeicher 77, einen Ausgangs-Cachespeicher 79 und ein Parameter-FIFO-Speicher 75 mit einer First-In First-Out Charakteristik auf. Die Filtereinrichtung 76 kann somit der Rotationseinrichtung 10 und der Interpolationseinrichtung 12 der ersten Ausführungsform entsprechen.

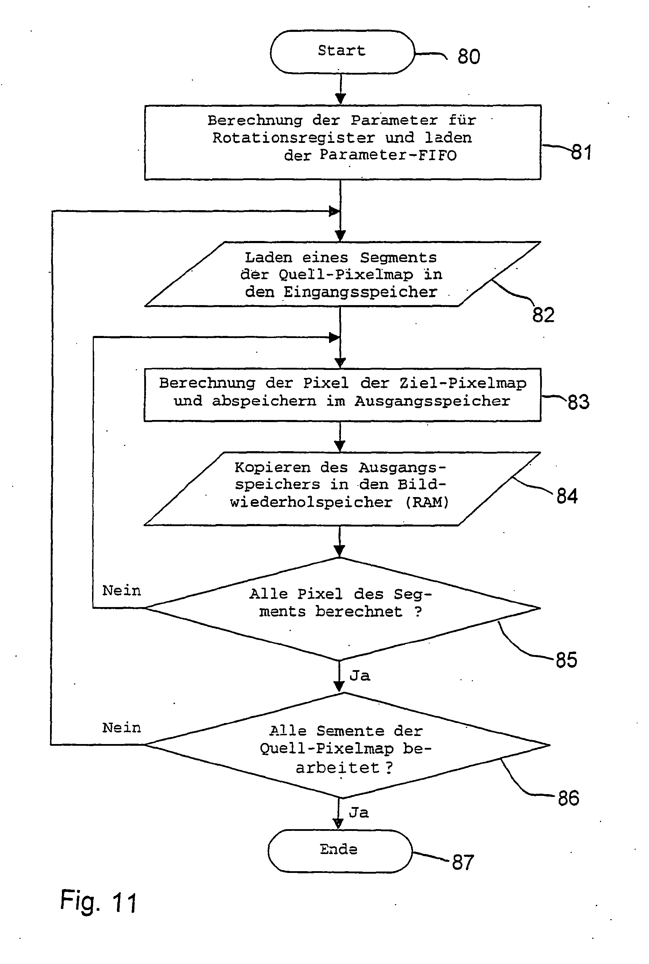

Die Arbeitsweise der in Fig. 9 gezeigten Vorrichtung wird am Beispiel der Drehung des Zeigers von der Fig. 7 in die Fig. 8 mit der Darstellung der Fig. 10 und dem in Fig. 11 beschriebenen Flussdiagramm erläutert. Nach dem Start in Schritt 80 berechnet der Mikroprozessor 70 in Schritt 81 die Objektsegmente OS1 bis 9 des zu drehenden und zu skalierenden Objektbildes OB und anhand der einstellbaren Parameter Drehwinkel, Skalierfaktor X und Skalierfaktor Y die resultierenden, umschließenden Zielsegmentbereiche ZSB1 bis 8. In Schritt 82 wird das erste Objektsegment OS1 aus dem Programmspeicher 74 in den Eingangs-Cachespeicher 77 geladen. Zur Verringerung der Zugriffszeit können die Objektsegmente auch jeweils vorher von dem Programmspeicher 74 in den Arbeitsspeicher 73 geladen werden und in Schritt 82 jeweils von dem Arbeitspeicher 73 in den Eingangs-Cachespeicher 77 geladen werden.

In Schritt 83 werden von dem Mikroprozessor 70 für jeden Bildpunkt des Zielsegmentes ZS1 oder Zielsegmentbereiches ZSB1 die Zielbildpunktdaten R, G, B, alpha berechnet. Hierzu werden zunächst Parameter für die Filtereinrichtung 76 berechnet und im Parameter-FIFO 75 gespeichert. Die Filtereinrichtung 76 entnimmt die Parameter aus dem Parameter-FIFO, berechnet die Bildpunkte (Pixel) des Zielbildsegments ZSB1 unter Verwendung des Objektsegmentes OS1 aus dem Eingangs-Cachespeicher 77 und speichert diese im Ausgangs-Cachespeicher 79. In Schritt 84 werden die Zielbildpunktdaten von dem Ausgangs-Cachespeicher 79 in den Bildwiederholspeicher 78 (Framebuffer) gegeben. Diese Schritte werden gemäß den Schritten 85, 86 für sämtliche Zielbildpunkte sämtlicher Objektsegmente durchgeführt. Nach Durchführung dieser Schleifen ist das Zielbild in dem Bildwiederholspeicher 78 geladen, um - mit anderen Darstellungen - auf der Anzeigeeinrichtung 1 dargestellt zu werden.

Für eine gute Dimensionierung zu relativ geringen Kosten werden der Eingangs-Cachespeicher, Ausgangs-Cachespeicher und Parameter-FIFO möglicht klein ausgeführt sein. Der Eingangs-Cachespeicher 77 bestimmt hierbei die Größe der Objektsegmente und weist z. B. 64 x 64 Pixel mit 4 Byte pro Pixel und somit 16KByte auf. Der Ausgangs-Cachespeicher 79 kann z. B. eine Zeile des Zielsegmentes (oder des Zielsegmentbereichs) erfassen und somit durch das Produkt Zeilengröße des Eingangs-Cachespeichers x max. Skalierfaktor x 4 Byte/Pixel = 64 x 4 x 4 = 1 KByte dimensioniert sein. Die Größe des Parameter-FIFO 75 wird vorteilhafterweise auf die für die Berechnung einer Ausgangszeile notwendigen Parameter angestimmt, also im oben beschriebenen Beispiel mit vier Parametern pro Pixel durch das Produkt Zeilengröße des Ausgangscachespeichers x Skalierungsfaktor x Parameter/Pixel = 64 x 4 x 4 = 1 KByte. Die Filtereinrichtung 76 des Grafikcontrollers 72 ist eine Hardware-Abbildung der Transformation bzw inversen Transformation, insbesondere einer Transformation, die eine Rotation und/oder Skalierung umfasst, aber auch einer komplexeren Transformation. Die Rechenvorschrift ist fest in der Hardware umgesetzt, um eine maximale Bearbeitungsgeschwindigkeit zu erreichen. Im oben angegebenen Beispiel der Drehung des Zeigers kann hierzu z. B. eine bilineare Filterung von vier Pixeln mit zwei Gewichtungsfaktoren verwendet werden. Der Mikroprozessor 70 mit Programmspeicher 74 übernimmt die Ablaufsteuerung der Rotation/Skalierung und die Berchnung vonden benötigten Koordinaten, die im Parameter-FIFO 75 abgelegt werden, insbesondere die Einteilung des Objektbildes bzw. der Objektbild-Pixeldatei in ein oder mehrere Segmente, das Initiieren des Ladens der einzelnen Segmente in den Eingangs-Cachespeicher, die Berechnung der Adressen der Zielbildpixel, die Berechnung der Objektbildpixel, die zur Interpolation der Zielbildpunktdaten herangezogen werden, die Berechnung der Gewichtungsfaktoren bzw. Filterfaktoren für jeden Zielbildpunkt, das Schreiben der Filter-Parameter in den Parameter-FIFO und das Initiieren des Schreibens des Ausgangs-Caches in den Arbeitsspeicher /Bildwiederholspeicher.

Gemäß einer Ausführungsform kann der Mikroprozessor 70 auf dem gleichen Chip wie der Grafikcontroller 72 einschließlich oder ausschließlich Eingangs-Cachespeicher 77 und Ausgangs-Cachespeicher 79 ausgebildet sein.

Gemäß einer hierzu alternativen Ausführungsform ist der Eingangs-Cachespeicher 77 als Doppelspeicher ausgeführt. In dieser Ausführungsform kann während der Berechnung eines geladenen Objektsegmentes in der Filtereinrichtung bereits das nächste Objektsegment in den freien Teil des Eingangs-Cachespeichers 77 nachgeladen werden kann.

Gemäß einer weiteren Ausführungsform wird der Ausgangs-Cachespeicher 79 als Doppelspeicher ausgeführt. In dieser Ausführungsform können, während der Grafikcontroller 72 den Ausgangs-Cachespeicher 79 in den Bildwiederholspeicher 78 kopiert, in der Filtereinrichtung 76 die nächsten Bildpunkte berechnet und in den freien Teil des Ausgangs-Cachespeicher 79 abgelegt werden.

Das Objektbild OB kann von dem Grafikcontroller 72 vor der Transformation segmentiert werden oder bereits segmentiert in dem Programmspeicher 74, insbesondere bei Ausbildung als Flash-ROM, abgespeichert sein.

Gemäß einer Ausführungsform kann die Filtereinrichtung die Zielbildpunktdaten mit konstanten Gewichtungsfaktoren berechnen, die somit nicht von dem Mikroprozessor übertragen werden müssen, oder die Gewichtungsfaktoren aus der Angabe der Objekt- und Zielbildpunkte berechnen. Weiterhin ist auch die Übertragung nur einer Objektbildpunktadresse pro Zielbildpunkt an die Filtereinrichtung möglich, woraufhin weitere Objektbildpunktadressen nachfolgend aus dieser Objektbildpunktadresse berechnet werden.

Weiterhin kann das Schreiben des Ausgangsspeichers in den Bildwiederholspeicher alternativ zu der obigen Ausführungsform auch von der Filtereinrichtung initiiert werden.

Bei allen Ausführungsformen können unterschiedliche Datenformate der Objektbildpunkt-Pixeldatei unterstützt werden, z. B. 8 Bit Alpha und 8 Bit Index und 256 Palettenpixel, 8 Bit Index und 8 Bit Alpha und 356 Palettenpixel, 8 Bit Rot und 8 Bit Grün und 8 Bit Blau und 8 Bit Alpha. Alternativ zu der 8 Bit Darstellung der Farben und Alpha-Werte sind auch Datenformate mit mehr oder weniger Bits denkbar, wie z. B. 5 Bit Rot und 6 Bit Grün und 5 Bit Blau.

## Patentansprüche

1. Verfahren zur Transformation eines Objektbildes (OB), insbesondere für eine Darstellung auf einer Anzeigeeinrichtung (1) mit einer matrixförmigen Anordnung von Zielbildpunkten (Zᵢ), bei dem für zumindest einen Teil der Zielbildpunkte (Zᵢ) durch eine inverse Transformation Quellbildpunkte (Qᵢ (- β)) ermittelt werden, die Quellbildpunkte (Qᵢ (- β)) mit vorgespeicherten Objektbildpunkten (Oₖ) verglichen werden und aus diesem Vergleich Zielbildpunktdaten (Rᵢ, Gᵢ, B;, αᵢ) der Zielbildpunkte (Zᵢ) ermittelt werden, wobei die Zielbildpunktdaten und Objektbildpunktdaten jeweils Grundfarbwerte (R, G, B) und einen Transparenzwert (α) umfassen und bei der Ermittlung der Zielbildpunktdaten für jeden Quellbildpunkt in einem Entscheidungsschritt überprüft wird, ob er genau auf einem Objektbildpunkt fällt, und in dem Fall, dass der Quellbildpunkt mit einem Objektbildpunkt übereinstimmt, die betreffenden Objektbildpunktdaten als Zielbildpunktdaten genommen werden, und in dem Fall, dass der Quellbildpunkt mit keinem der Objektbildpunkte übereinstimmt, die Zielbildpunktdaten aus den Objektbildpunktdaten benachbarter Objektbildpunkte in der Weise ermittelt werden, dass die Zielbildpunktdaten durch eine lineare Interpolation aus den Objektbildpunktdaten der benachbarten Objektbildpunkte berechnet werden, wobei die Bildpunktdaten der Objektbildpunkte entsprechend dem jeweiligen Abstand zu den betreffenden Objektbildpunkten gewichtet werden.

2. Verfahren nach Anspruch 1, **dadurch gekennzeichnet, dass** die Objektbildpunkte (Oₖ) mit Objektbildpunktdaten im Pixelmap-Format gespeichert sind und die Zielbildpunktdaten im Pixelmap-Format ermittelt werden.

3. Verfahren nach Anspruch 1 oder 2, **dadurch gekennzeichnet, dass** die Transformation eine Rotation um einen Drehwinkel (β) und/oder einer Skalierung mit Skalierungsfaktoren und/oder eine Translation umfasst, und die inverse Transformation eine Rotation um den negativen Drehwinkel (- β) und/oder eine Skalierung mit den Kehrwerten der Skalierungsfaktoren und/oder eine Translation umfasst.

4. Verfahren nach einem der vorherigen Ansprüche, **dadurch gekennzeichnet, dass** bei dem Vergleich der Quellbildpunkte mit den Objektbildpunkten zunächst ermittelt wird, ob die Quellbildpunkte in das Objektbild (OB) fallen, wobei für Quellbildpunkte, die in das Objektbild fallen, Zielbildpunktdaten ermittelt werden, und für Quellbildpunkte, die nicht in das Objektbild fallen, keine Zielbildpunktdaten ermittelt werden.

5. Verfahren nach einem der vorherigen Ansprüche, **dadurch gekennzeichnet, dass** die Objektbildpunkte mit einer höheren Auflösung als die Zielbildpunkte gespeichert sind.

6. Verfahren nach einem der vorherigen Ansprüche, **dadurch gekennzeichnet, dass** zunächst durch die Transformation einiger Objektbildpunkte (A,C,D,E), vorzugsweise von Objektbildpunkten mit minimalen und maximalen Koordinaten, ein Zielbildbereich (ZB) ermittelt wird und ermittelt wird, welche Zielbildpunkte (Zᵢ) in dem Zielbild (ZB) liegen, und für Zielbildpunkte außerhalb des Zielbildes (ZB) keine Berechnung der Quellbildpunkte durchgeführt wird.

7. Verfahren nach Anspruch 6, **dadurch gekennzeichnet, dass** das Objektbild in mehrere Objektsegmente (OS1-9) unterteilt ist, zu jedem Objektsegment durch Transformation zumindest einiger seiner Objektbildpunkte, vorzugsweise von Objektbildpunkten mit minimalen und maximalen Koordinaten, ein Zielsegment (ZS1-9) oder ein das Zielbild umfassender Zielsegmentbereich (ZSB1-9) ermittelt wird, und die Vereinigung der Zielsegmente (ZS1-9) oder Zielsegmentbereich (ZSB1-9) als Zielbild genommen wird.

8. Verfahren nach Anspruch 7, **dadurch gekennzeichnet, dass** Zielsegmentbereiche (ZSB1-9) ermittelt werden, wobei als die Zielsegmentbereiche (ZSB1-9) Rechtecke mit horizontaler und vertikaler Ausrichtung ihrer Seiten gewählt werden.

9. Verfahren nach Anspruch 7, **dadurch gekennzeichnet, dass** die Zielbereiche (ZS1-9) ermittelt werden, indem Objektbildpunkte mit minimalen und maximalen Koordinaten als Objektsegmenteckpunkte (OE1,2,3,4) gewählt und auf Zielsegmenteckpunkte (ZE1,2,3,4) transformiert werden, durch die Zielsegmenteckpunkte (ZE1,2,3,4) verlaufenden Ränder (ZR12) der Zielsegmente (ZS1-9) als vorzugsweise lineare Geraden parametrisiert werden und die innerhalb der Ränder der Zielsegmente (ZS1-9) liegenden Bildpunkte, vorzugsweise einschließlich der auf den Rändern liegenden Bildpunkte, als die Zielbildpunkte des Zielsegmentes (ZS1-9) ermittelt werden.

10. Verfahren nach einem der Ansprüche 7-9, **dadurch gekennzeichnet, dass** Parameter für die Transformation ermittelt und in einem Parameter-Speicher, vorzugsweise einem FIFO-Speicher, gespeichert werden,
jeweils ein Objektsegment in einen Eingangs-Speicher, vorzugsweise einen Eingangs-Cachespeicher einer Grafik-Steuereinrichtung, geladen und zu dem Objektsegment das Zielsegment oder der Zielsegmentbereich ermittelt wird,
für die Zielbildpunkte des Zielsegmentes oder Zielsegmentbereiches (ZSB1-9) die Zielbildpunktdaten aus den Objektbildpunktdaten und den Parametern berechnet werden.

11. Verfahren nach Anspruch 10, **dadurch gekennzeichnet, dass** der Eingangsspeicher (77) als Doppelspeicher verwendet wird, wobei gleichzeitig ein Objektsegment von der Filtereinrichtung (76) aus dem Eingangsspeicher (77) ausgelesen und ein nachfolgendes Objektsegment in ihm abgespeichert wird.

12. Verfahren nach einem der Ansprüche 7-11, **dadurch gekennzeichnet, dass** die ermittelten Zielbildpunktdaten in einen Ausgangsspeicher, vorzugsweise einen Ausgangs-Cachespeicher (79) ausgegeben, zwischengespeichert und von dem Ausgangsspeicher an einen Arbeitsspeicher (73) oder einen Bildwiederholungsspeicher (78) ausgegeben werden.

13. Verfahren nach Anspruch 12, **dadurch gekennzeichnet, dass** der Ausgangsspeicher (79) als Doppelspeicher verwendet wird, wobei gleichzeitig ermittelte Zielbildpunktdaten in den Ausgangsspeicher eingegeben und aus dem Ausgangsspeicher zwischengespeicherte Zielbildpunktdaten an den Arbeitsspeicher oder den Bildwiederholungsspeicher ausgegeben werden.

14. Verfahren nach einem der Ansprüche 7-13, **dadurch gekennzeichnet, dass** das Objektbild (OB) in Objektsegmente (OS) unterteilt in einem Speicher, vorzugsweise einem Programmspeicher (74), z. B. einem Flash-ROM, abgespeichert ist, aus dem die Objektsegmente sukzessive ausgelesen werden.

15. Verfahren nach einem der vorherigen Ansprüche, **dadurch gekennzeichnet, dass** das Objektbild (OB) von einem Objektbildspeicher, vorzugsweise einem Programmspeicher (74), z. B. einem Flash-ROM, ausgelesen, in einen Arbeitsspeicher (73) zwischengespeichert und aus dem Arbeitsspeicher (73) zum Vergleich mit den ermittelten Quellbildpunkten ausgelesen werden.

## Claims

1. Method for transforming an object image (OB), in particular for a representation on a display device (1) with a matrix-type arrangement of target pixels (Zᵢ), in which source pixels (Qᵢ(-β)) are determined for at least some of the target pixels (Zᵢ) by means of an inverse transformation, the source pixels (Qᵢ(-β)) are compared with prestored object pixels (Oₖ) and target pixel data (Rᵢ, Gᵢ, Bᵢ, αᵢ) of the target pixels (Zᵢ) are determined from this comparison, the target pixel data and object pixel data in each case comprising primary colour values (R, G, B) and a transparency value (α) and, when determining the target pixel data, a check is made for each source pixel in a decision step to establish whether it falls precisely onto an object pixel, and, in the case where the source pixel matches an object pixel, the relevant object pixel data are taken as target pixel data, and, in the case where the source pixel matches none of the object pixels, the target pixel data are determined from the object pixel data of adjacent object pixels in such a way that the target pixel data are calculated by a linear interpolation from the object pixel data of the adjacent object pixels, the pixel data of the object pixels being weighted according to the respective distance from the relevant object pixels.

2. Method according to Claim 1, **characterized in that** the object pixels (Oₖ) are stored with object pixel data in the pixel map format and the target pixel data are determined in the pixel map format.

3. Method according to Claim 1 or 2, **characterized in that** the transformation comprises a rotation by a rotation angle (β) and/or a scaling with scaling factors and/or a translation, and the inverse transformation comprises a rotation by the negative rotation angle (-β) and/or a scaling with the reciprocals of the scaling factors and/or a translation.

4. Method according to one of the preceding claims, **characterized in that** the comparison of the source pixels with the object pixels involves firstly determining whether the source pixels fall into the object image (OB), target pixel data being determined for source pixels which fall into the object image and no target pixel data being determined for source pixels which do not fall into the object image.

5. Method according to one of the preceding claims, **characterized in that** the object pixels are stored with a higher resolution than the target pixels.

6. Method according to one of the preceding claims, **characterized in that** firstly a target image region (ZB) is determined by the transformation of some object pixels (A, C, D, E), preferably of object pixels having minimum and maximum coordinates, and it is determined which target pixels (Zᵢ) lie in the target image (ZB), and no calculation of the source pixels is carried out for target pixels outside the target image (ZB).

7. Method according to Claim 6, **characterized in that** the object image is subdivided into a plurality of object segments (OS1-9), a target segment (ZS1-9) or a target segment region (ZSB1-9) encompassing the target image is determined for each object segment by transformation of at least some of its object pixels, preferably of object pixels having minimum and maximum coordinates, and the combination of the target segments (ZS1-9) or target segment region (ZSB1-9) is taken as target image.

8. Method according to Claim 7, **characterized in that** target segment regions (SZB1-9) are determined, rectangles with horizontal and vertical orientation of their sides being chosen as the target segment regions (ZSB1-9).

9. Method according to Claim 7, **characterized in that** the target regions (ZS1-9) are determined by a procedure in which object pixels having minimum and maximum coordinates are chosen as object segment corner points (OE1, 2, 3, 4) and transformed onto target segment corner points (ZE 1, 2, 3, 4), edges (ZR12) of the target segments (SZ1-9) that run through the target segment corner points (ZE 1, 2, 3, 4) are parameterized as preferably linear straight lines and the pixels lying within the edges of the target segments (ZS1-9), preferably including the pixels lying on the edges, are determined as the target pixels of the target segment (ZS1-9).

10. Method according to one of Claims 7-9, **characterized in that** parameters for the transformation are determined and stored in a parameter memory, preferably a FIFO memory,
a respective object segment is loaded into an input memory, preferably an input cache memory or graphics controller, and the target segment or the target segment region is determined with respect to the object segment,
for the target pixels of the target segment or target segment region (ZSB1-9) the target pixel data are calculated from the object pixel data and the parameters.

11. Method according to Claim 10, **characterized in that** the input memory (77) is used as a double memory, simultaneously an object segment being read out from the input memory (77) by the filter device (76) and a subsequent object segment being stored in it.

12. Method according to one of Claims 7-11, **characterized in that** the target pixel data determined are buffer-stored in an output memory, preferably an output cache memory (79), and are output from the output memory to a main memory (73) or a frame buffer (78).

13. Method according to Claim 12, **characterized in that** the output memory (79) is used as a double memory, simultaneously target pixel data determined being input into the output memory and buffer-stored target pixel data being output from the output memory to the main memory or the frame buffer.

14. Method according to one of Claims 7-13, **characterized in that** the object image (OB) subdivided into object segments (OS) is stored in a memory, preferably a program memory (74), e.g. a flash ROM, from which the object segments are read out progressively.

15. Method according to one of the preceding claims, **characterized in that** the object image (OB) is read out from an object image memory, preferably a program memory (74), e.g. a flash ROM, is buffer-stored in a main memory (73) and read out from the main memory (73) for comparison with the source pixels determined.

## Revendications

1. Procédé de transformation d'une image d'objet (OB), en particulier pour une représentation sur un dispositif d'affichage (1), comprenant un ensemble de points (Zi) de l'image cible formant une matrice, selon lequel on détermine, pour au moins une partie des points (Zᵢ) de l'image cible, des points (Qᵢ (-β)) de l'image source par une transformation inverse, on compare ces points (Qi (-β)) de l'image source avec des points (Qₖ) de l'image d'objet mémorisée préalablement et on détermine, à partir de cette comparaison, des données (Rᵢ, Gᵢ, Bᵢ, αᵢ) des points de l'image cible (Zᵢ),
les données des points de l'image cible et les données des points de l'image d'objet comprenant à chaque fois des valeurs de couleurs primaires (R, G, B) et une valeur de transparence (α) et, au cours de la détermination des données de points de l'image cible, on vérifie pour chaque point de l'image source au cours d'une étape de décision s'il tombe exactement sur un point de l'image d'objet et, dans le cas où le point de l'image source coïncide avec un point de l'image d'objet, les données des points de l'image d'objet sont pris comme points de données de l'image cible et, dans le cas où le point de l'image source ne coïncide avec aucun des points de l'image d'objet, on détermine les données des points de l'image cible à partir des données de points adjacents de l'image d'objet de manière à ce que les données des points de l'image cible soient calculées par une interpolation linéaire à partir des données des points adjacents de l'image d'objet, les données des points de l'image d'objet étant pondérées conformément à la distance respective des points de l'image d'objet concernés.

2. Procédé selon la revendication 1,
**caractérisé en ce que**
les points de l'image d'objet (Qₖ) sont mémorisés avec les données de points de l'image d'objet dans un format de mappe de pixels et les données des points de l'image cible sont déterminées dans le format de mappe de pixels.

3. Procédé selon la revendication 1 ou 2,
**caractérisé en ce que**
la transformation comprend une rotation autour d'un angle (β) et/ou un changement d'échelle à l'aide de coefficients de changement d'échelle et/ou une translation, et la transformation inverse comprend une rotation autour de l'angle négatif (-β) et/ou un changement d'échelle avec les valeurs inverses des coefficients de changement d'échelle et/ou une translation.

4. Procédé selon l'une des revendications précédentes,
**caractérisé en ce que**
lors de la comparaison des points de l'image source avec les points de l'image d'objet, on détermine d'abord si les points de l'image source tombent dans l'image d'objet (OB), et l'on détermine des données de points d'image cible pour les points de l'image source tombant dans l'image d'objet et, pour les points de l'image source ne tombant pas dans l'image d'objet, on ne détermine aucune donnée de points d'image cible.

5. Procédé selon l'une des revendications précédentes,
**caractérisé en ce que**
les points de l'image d'objet sont mémorisés comme points d'image cible avec une résolution plus élevée.

6. Procédé selon l'une des revendications précédentes,
**caractérisé en ce qu'**
on détermine d'abord une zone d'image cible (ZB) par la transformation de quelques points (A, C, D, E) de l'image d'objet, de préférence des points de l'image d'objet ayant des coordonnées minimales et maximales, puis on détermine quels points (Zᵢ) de l'image cible sont situés dans l'image cible (ZB) et, pour les points de l'image cible situés à l'extérieur de l'image cible (ZB), on ne réalise aucun calcul des points de l'image source.

7. Procédé selon la revendication 6,
**caractérisé en ce que**
l'image d'objet est divisée en plusieurs segments d'objet (OS1 à 9), et l'on détermine, pour chaque segment d'objet, un segment cible (ZS1 à 9) ou une zone de segment cible (ZSB1 à 9) comprenant l'image cible par transformation d'au moins quelques-uns de ses points d'image d'objet, de préférence des points d'image d'objet ayant des coordonnées minimales et maximales, puis on prend l'association des segments cibles (ZS 1 à 9) ou de la zone de segments cibles (ZSB1 à 9) comme image cible.

8. Procédé selon la revendication 7,
**caractérisé en ce qu'**
on détermine des zones de segments cibles (ZSB 1 à 9), où l'on choisit comme zones de segments cibles (ZSB1 à 9) des rectangles dont les côtés ont une orientation horizontale ou verticale.

9. Procédé selon la revendication 7,
**caractérisé en ce qu'**
on détermine les zones cibles (ZS1 à 9) en choisissant comme points angulaires de segments d'objet (OE 1, 2, 3, 4) des points d'image d'objet ayant des coordonnées minimales et maximales, et on les transforme en points angulaires de segments cibles (ZE1, 2, 3, 4), en paramétrant des bords (ZR12) des segments cibles (ZS1 à 9) qui passent par les points angulaires de segments cibles (ZE1, 2, 3, 4) comme des droites de préférence linéaires et en déterminant les points d'image situés à l'intérieur des bords des segments cibles (ZS1 à 9), de préférence comprenant les points d'image situés sur les bords, comme les points d'image cible du segment cible (ZS 1 à 9).

10. Procédé selon une des revendications 7 à 9,
**caractérisé en ce qu'**
on détermine des paramètres pour la transformation que l'on mémorise dans une mémoire, de préférence une mémoire FIFO (premier entré, premier sorti),
on charge à chaque fois un segment d'objet dans une mémoire d'entrée, de préférence une mémoire cache d'entrée d'un dispositif de commande graphique, et on détermine le segment cible ou la zone de segment cible par rapport au segment d'objet, où, pour les points de l'image cible du segment cible ou de la zone de segments cibles (ZSB 1 à 9),
on calcule les données de points de l'image cible à partir des données de points de l'image d'objet et des paramètres.

11. Procédé selon la revendication 10,
**caractérisé en ce que**
la mémoire d'entrée (77) est une mémoire double, dans laquelle simultanément un segment d'objet est lu par le dispositif de filtrage (76) à partir de la mémoire d'entrée (77) et un segment d'objet suivant est enregistré dans celle-ci.

12. Procédé selon une des revendications 7 à 11,
**caractérisé en ce que**
les données de points de l'image cible qui ont été déterminées sont sorties dans une mémoire de sortie, de préférence une mémoire cache de sortie (79), mémorisées de manière intermédiaire et sorties de la mémoire de sortie vers une mémoire de travail (73) ou une mémoire de répétition d'image (78).

13. Procédé selon la revendication 12,
**caractérisé en ce que**
la mémoire de sortie (79) est une mémoire double, dans laquelle simultanément des données de points de l'image cible qui ont été déterminées sont entrées dans la mémoire de sortie et des données de points de l'image cible qui ont été mémorisées de manière intermédiaire dans la mémoire de sortie sont sorties vers la mémoire de travail ou la mémoire de répétition d'image.

14. Procédé selon l'une des revendications 7 à 13,
**caractérisé en ce que**
l'image d'objet (OB) divisée en segments d'objet (OS) est enregistrée dans une mémoire, de préférence une mémoire de programme (74), par exemple une mémoire ROM Flash, à partir de laquelle sont lus successivement les segments d'objets.

15. Procédé selon l'une des revendications précédentes,
**caractérisé en ce que**
l'image d'objet (OB) est lue à partir d'une mémoire d'image d'objet, de préférence une mémoire de programme (74), par exemple une mémoire ROM Flash, est enregistrée de manière intermédiaire dans une mémoire de travail (73) et est lue à partir de la mémoire de travail (73) pour être comparée aux points de l'image source qui ont été déterminés.
